**Europäisches Patentamt**

**European Patent Office**

**Office européen des brevets**

(19)

(11) Publication number : **0 298 941 B1**

(12) # EUROPEAN PATENT SPECIFICATION

(45) Date of publication of patent specification :
**18.03.92 Bulletin 92/12**

(51) Int. Cl.⁵ : **F02C 3/20,** F23G 7/06

(21) Application number : **88850234.1**

(22) Date of filing : **28.06.88**

(54) **Method for destructing undesired organic substances.**

(30) Priority : **06.07.87 SE 8702785**

(43) Date of publication of application :
**11.01.89 Bulletin 89/02**

(45) Publication of the grant of the patent :
**18.03.92 Bulletin 92/12**

(84) Designated Contracting States :
**AT BE CH DE ES FR GB GR IT LI LU NL SE**

(56) References cited :
**DE-A- 2 538 413**
**DE-A- 2 543 761**

(56) References cited :
**DE-A- 2 825 596**
**GB-A- 1 449 514**
**GB-A- 1 476 944**
**US-A- 4 362 500**

(73) Proprietor : **ABB STAL AB**
**S-612 20 Finspång (SE)**

(72) Inventor : **Strand, Torsten**
**Sundsvägen 35**
**S-612 00 Finspäng (SE)**

(74) Representative : **Ström, Tore et al**
**Ström & Gulliksson AB Studentgatan 1 P.O.**
**Box 4188**
**S-203 13 Malmö (SE)**

EP 0 298 941 B1

Jouve, 18, rue Saint-Denis, 75001 PARIS

## Description

The invention relates to a method for destructing, by oxidation, undesired organic substances diluted with air.

It has been proposed particularly for destructing solvent vapours, e.g. such as occur in paint spraying and escape with the ventilation air from spraying chambers. The solvents then most frequently involved are toluene, methyl benzene, xylene (di-methyl benzene), ethyl acetate, butyl acetate, cyclohexane and octane. The solvents are present at low concentrations of the order of 20 to 220 ppm, which makes difficult to recover the solvents from the ventilation air. The best mode of neutralizing such substances therefore is to oxidize them, carbon dioxide and water being produced as the end product.

However, it has been found that the temperature and period of the oxidation are critical factors and it is thus necessary to effect the oxidation within a predetermined temperature range and a predetermined time interval. Otherwise, the oxidation can be more or less incomplete.

The purpose of the invention is to provide an effective and economic destruction of the solvents by oxidation, the final product being practically only carbon dioxide and water.

In order to obtain this purpose the invention provides a method of the type disclosed in DE-A-2543761, for destructing, by oxidation, undesired organic substances diluted with air, and according to the invention this method has obtained the characterizing features of claim 1.

By the method in the invention the heat energy is utilized which has to be supplied for the oxidation and, moreover, also the energy bound in the solvents will be utilized.

Embodiments of the invention will be described in more detail below with reference to the accompanying drawings in which

FIG. 1 is a diagram showing a turbine plant for practising the method of the invention,

FIG. 2 is an elevational view illustrating the constructive embodiment of essential elements of the plant,

FIG. 3 is an enlarged axial cross-sectional view of the combustion chamber, and

FIG. 4 is a diagram showing a waste heat boiler plant for practising the method of the invention.

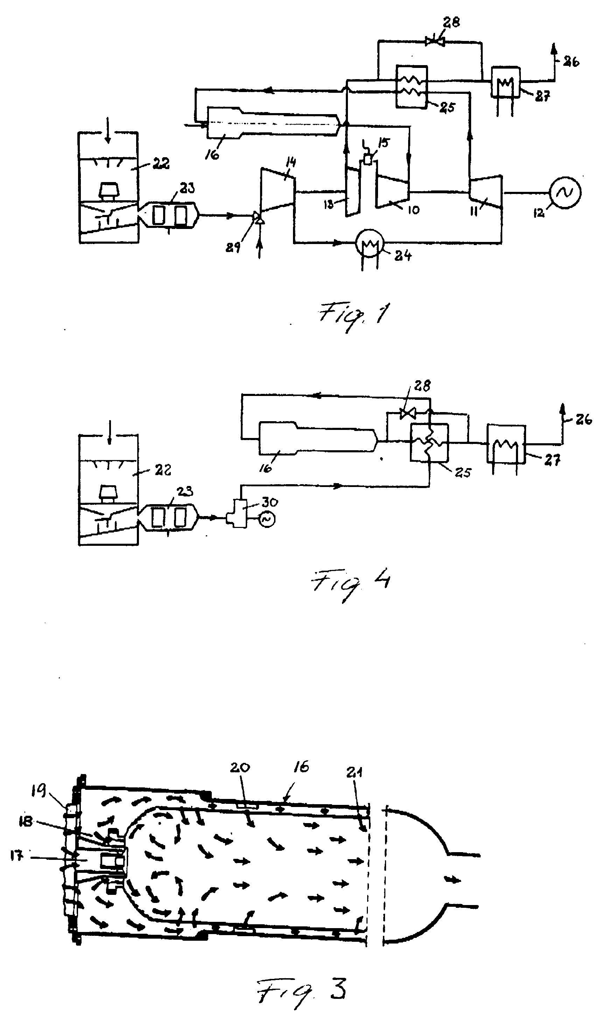

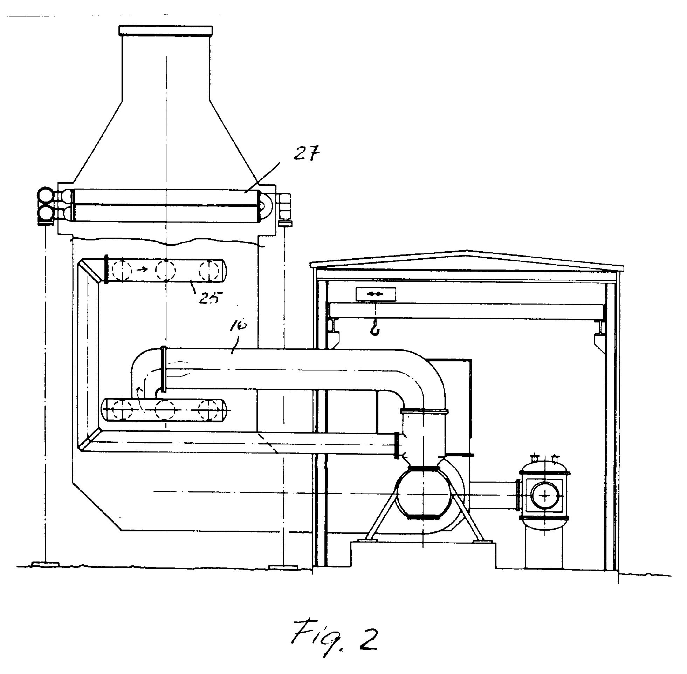

The turbine plant shown in FIGS. 1 and 2 comprises a turbine unit including a high pressure turbine 10 connected to a high pressure compressor 11 and an electric generator 12 for recovering utility power from the unit, and a low pressure turbine 13 connected to a low pressure compressor 14. Between the high pressure turbine and the low pressure turbine a controllable connection is provided which in the present case comprises a circular array of adjustable (rotatable) vanes 15. This connection provides the power control means of the turbine unit.

An elongated combustion chamber 16 formed as a tube is connected at the gas outlet thereof to the high pressure turbine to supply gas to said turbine and thus to the low pressure turbine connected in series therewith. The combustion chamber is shown in more detail in FIG. 3. At the left end thereof a burner 17 is provided for burning oil or gas. Around the burner, a primary air inlet 18 is provided having a turbulator, and outwardly thereof there is an inlet 19 for cooling air. In the shell of the combustion chamber, an inlet 20 for secondary air and an inlet 21 for diluting air are provided.

The suction side of the low pressure compressor 14 is connected to a spraying chamber 22 via a particle filter 23 to draw the air from the spraying chamber with solvents entrained therein, particles carried by the air being separated in the particle filter 23. The pressure side of the low pressure compressor is connected to the suction side of the high pressure compressor 11 via an intermediate cooler 24, the high pressure compressor being connected to the combustion chamber 16 via a recuperator 25 for supplying the air with solvents entrained therein to the combustion chamber. Then, the air can be supplied as primary air through the air inlet 18, as cooling air through the air inlets 19, as secondary air through the air inlets 20 or as diluting air through the air inlets 21. The low pressure turbine 13 is connected to a chimney as indicated by an arrow 26, the recuperator 25 being located between the waste gas conduit of the low pressure turbine and the air inlet conduit of the combustion chamber, extending from the high pressure compressor, for heating the compressor air by heat exchange with the waste gas. Furthermore, in the waste gas conduit of the low pressure turbine, a waste heat boiler 27 is provided for generating steam or hot water. A shunt valve 28 is provided over the recuperator 25 for controlling the waste gas flow from the low pressure turbine 13, passing through the recuperator, and thus the ratio between the electricity production by means of the generator 12 of the turbine unit and the heat production by means of the waste heat boiler 27.

By controlling the gas condition at the inlet side of the low pressure turbine 13 by means of the controllable connection 15 and by recovering utility power directly from the high pressure turbine 10 via the generator 12 substantially at a constant rotational speed the temperature of the gas to the high pressure turbine can be kept substantially constant independently of the utility power recovered from the gas turbine unit, i.e. electric power from the generator 12 and/or heat power from the waste heat boiler 27. This means that the temperature in a reaction zone in the burner 16, which extends from the inlets for secondary air to the waste gas outlet of the combustion chamber can be maintained within a predetermined temperature range. Moreover, the combustion chamber should be constructed such that the duration of stay of the air supplied to the combustion chamber, in the reaction zone will not decrease below a predetermined value. It is achieved as a consequence thereof that there can be maintained in the combustion chamber the prerequisites required for a complete oxidation of the solvents supplied, to carbon dioxide and water. This is promoted also by the turbulence of the air in the combustion chamber, which can be initiated by means of the turbulator in the air inlet 18 and by a suitable direction of the air supplied through the air inlets 19 to 21.

If it is desired to keep the turbine unit operating also when the spraying chamber 22 is operating with a reduced ventilation flow or is taken out of operation, valve means 29 can be provided at the inlet side of the low pressure compressor 14 for the supply of fresh air.

In FIG. 4, there is no turbine unit and the combustion chamber 16 supplies the waste heat boiler 27 only. In this case, the ventilation air with solvents entrained therein from the spraying chamber is transported by means of a fan 30 via the recuperator 25 to the combustion chamber 16. The predetermined temperature in the combustion chamber is maintained by controlling the additional amount of fuel supplied to the burner 17. The heat quantity recovered from the waste heat boiler 27 is controlled by controlling the waste gas flow through the recuperator 25 by means of the valve 28.

Generally, the temperature in the reaction zone in the combustion chamber 16 should range from about 700°C to 900°C and the lower limit of the duration of stay in the reaction zone should range from about 0.3 s to about 0.4 s. For 99.9% destruction e.g. of benzene a temperature of 750°C and a duration of stay of 0.4 s will be required.

## Claims

1. Method for destructing, by oxidation, undesired organic substances diluted with air, wherein the air with substances entrained therein is supplied to and passed through a reaction zone in a combustion chamber (16) heated by burning supplementary fuel from one end of the chamber which is connected at the other end thereof to a gas turbine, and wherein the air with substances entrained therein is supplied to the combustion chamber (16) by means of a high pressure compressor (11) driven by the gas turbine being a high pressure turbine (10) of a gas turbine unit comprising in addition to the high pressure turbine (10) and the high pressure compressor (11) a low pressure turbine (13) driven by the waste gas from the high pressure turbine (10), and a low pressure compressor (14) driven by the low pressure turbine (13) and connected in series with the high pressure compressor (11) and wherein the temperature of the air with substances entrained therein is maintained at a temperature in the reaction zone within a predetermined temperature range extending from about 700 °C to about 900°C, **characterized** in that the gas condition at the inlet side of the low pressure turbine (13) is controlled by means of a controllable connection (15), and that the utility power of the gas turbine unit is recovered from the high pressure turbine (10) substantially at constant rotational speed thereof while maintaining the temperature of the gas to the high pressure turbine (10) substantially constant maintaining the air with substances entrained therein in the reaction zone for a time of flow the lower limit of which is within a time interval extending from about 0.3 to about 0.4 s, independently of the utility power recovered from the gas turbine unit.

2. Method as in claim 1 wherein heat exchange is provided between the air with substances entrained therein, which is supplied to the combustion chamber (16), and the waste gas discharged from the low pressure turbine (13).

3. Method as in claim 2 wherein the heat exchange is effected only with an adjustable portion of the waste gas or air flow.

4. Method as in claim 1 wherein the air with substances entrained therein is supplied to the combustion chamber (16) as primary air (18) and/or secondary air (20) and/or cooling air (19) and/or diluting air (21).

5. Method as in claim 1 wherein turbulence is imparted to the air with substances entrained therein, in the combustion chamber (16).

## Revendications

1. Procédé pour détruire par oxydation des substances organiques indésirables diluées dans l'air, dans lequel l'air avec les substances entraînées est amené à et passé dans une zone de réaction située dans une chambre de combustion (16), chauffée par la combustion d'un apport supplémentaire de combustible, depuis une extrémité de la chambre qui est reliée à son autre extrémité à une turbine à gaz et dans lequel l'air, avec les substances entraînées, est amené à la chambre de combustion (16) au moyen d'un compresseur à haute pression (11) entraîné par la turbine à gaz qui est la turbine à haute pression (10) d'un groupe à turbines à gaz, comprenant, en plus de la turbine à haute pression (10) et du compresseur à haute pression (11), une turbine à basse pression (13), entraînée par les gaz d'échappement provenant de la turbine à haute pression (10), et un compresseur à basse pression (14), entraîné par la turbine à base pression (13) et relié en série au compresseur à haute pression (11) et dans lequel la température de l'air avec les substances entraînées est maintenue à une valeur située dans la zone de réaction, dans les limites d'une plage de température prédéterminée, allant d'à peu près 700°C à à peu près 900°C, caractérisé en ce que l'état du gaz du côté entrée de la turbine à basse pression (13) est commandé/contrôlé au moyen d'une liaison (15) commandable et en ce que la puissance utile du groupe à turbines à gaz est récupérée sur la turbine à haute pression (10), à une vitesse de rotation sensiblement constante, tout en maintenant sensiblement constante la température du gaz sur la turbine à haute pression (10) avec maintien de l'air contenant les substances entraînées dans la zone de réaction pendant une durée d'écoulement dont la limite inférieure est située dans les limites d'un intervalle de temps allant d'à peu près 0,3 à à peu près 0,4 s, indépendamment de la puissance utile récupérée sur la turbine à gaz.

2. Procédé selon la revendication 1, dans lequel l'échange de chaleur est effectué entre l'air avec les substances entraînées, qui est amené de la chambre de combustion (16), et les gaz d'échappement évacués de la turbine à basse pression (13).

3. Procédé selon la revendication 2, dans lequel l'échange de chaleur est effectué seulement avec une proportion ajustable des gaz d'échappement ou de l'écoulement d'air.

4. Procédé selon la revendication 1, dans lequel l'air, avec les substances entraînées, est amené à la chambre de combustion (16), à titre d'air primaire (18), et/ou à titre d'air secondaire (20), et/ou d'air de refroidissement (19) et/ou d'air de dilution (21).

5. Procédé selon la revendication 1, dans lequel une turbulence est communiquée à l'air avec les substances entraînées, dans la chambre de combustion (16).

**Patentansprüche**

1. Verfahren zum durch Oxidation erfolgenden Vernichten von mit Luft verdünnten (vermischten) unerwünschten organischen Substanzen, wobei die Luft mit den von ihr mitgeführten Substanzen zu einer und durch eine Reaktionszone in einer Brennkammer (16), die durch Verbrennung von Zusatzbrennstoff erwärmt wird, vom einen Ende der Brennkammer, die an ihrem anderen Ende mit einer Gasturbine verbunden ist, her geführt wird, und wobei die Luft mit den von ihr mitgeführten Substanzen der Brennkammer (16) durch einen Hochdruckverdichter (11) zugespeist wird, der durch die Gasturbine als Hochdruckturbine (10) einer Gasturbineneinheit oder -anlage angetrieben wird, welche neben der Hochdruckturbine (10) und dem Hochdruckverdichter (11) eine durch das Abgas von der Hochdruckturbine (10) angetriebene Niederdruckturbine (13) und einen durch die Niederdruckturbine (13) angetriebenen und mit dem Hochdruckverdichter (11) in Reihe geschalteten Niederdruckverdichter (14) umfaßt, und wobei die Temperatur der Luft mit den von ihr mitgeführten Substanzen in der Reaktionszone auf einer Temperatur innerhalb eines vorbestimmten Temperaturbereichs von etwa 700°C bis etwa 900°C gehalten wird, dadurch **gekennzeichnet**, daß die (das) Gasbedingung oder -verhältnis an der Einlaßseite der Niederdruckturbine (13) mittels einer regelbaren Verbindung (15) geregelt wird und daß die Nutzenergie der Gasturbineneinheit von der Hochdruckturbine (10) bei praktisch konstanter Drehzahl derselben (rück)gewonnen wird, während die Temperatur des der Hochdruckturbine (10) zugeführten Gases im wesentlichen konstantgehalten und die Luft mit den von ihr mitgeführten Substanzen in der Reaktionszone während einer Strömungs-Zeitdauer gehalten wird, deren unterer Grenzwert innerhalb einer Zeitspanne von etwa 0,3 s bis etwa 0,4 s liegt, und zwar unabhängig von der von der Gasturbineneinheit (rück)gewonnenen Nutzenergie.

2. Verfahren nach Anspruch 1, dadurch gekennzeichnet, daß ein Wärmeaustausch zwischen der der Brennkammer (16) zugespeisten Luft mit den von ihr mitgeführten Substanzen und dem aus der Niederdruckturbine (13) entlassenen Abgas vorgesehen ist.

3. Verfahren nach Anspruch 2, dadurch gekennzeichnet, daß der Wärmeaustausch nur mit einem einstellbaren Teil des Abgases oder des Luftstroms erfolgt.

4. Verfahren nach Anspruch 1, dadurch gekennzeichnet, daß die Luft mit den von ihr mitgeführten Substanzen der Brennkammer (16) als Primärluft (18) und/oder Sekundärluft (20) und/oder Kühlluft (19) und/oder Verdünnungs- oder Mischluft (21) zugespeist wird.

5. Verfahren nach Anspruch 1, dadurch gekennzeichnet, daß der Luft mit den von ihr mitgeführten Substanzen in der Brennkammer (16) Turbulenz (bzw. eine Verwirbelung) erteilt wird.

Fig. 1

Fig 4

Fig. 3

Fig. 2